# EUROPÄISCHE PATENTANMELDUNG

(11) **EP 4 733 278 A1**
(43) Veröffentlichungstag der Anmeldung: **29.04.2026**
(21) Anmeldenummer: 24208291.5
(22) Anmeldetag: 23.10.2024
(51) Int. Cl.: C03B 9/193, B65D 43/02, C03B 11/08

(54) **EINKOCHGLAS-DECKEL UND VERFAHREN ZUR HERSTELLUNG DESSELBEN**

(71) Anmelder: Noelle + von Campe GmbH & Co. KG, 37691 Boffzen (DE)
(72) Erfinder: Sander, Mathias, 37691 Boffzen (DE)
(74) Vertreter: REHBERG HÜPPE + PARTNER

(57) **Zusammenfassung**

Die Erfindung betrifft ein Verfahren zur Herstellung eines Einkochglas-Deckels (14), der einen Bodenabschnitt 15), einen Versatzabschnitt (21) und einen Randabschnitt (16) aufweist. Der Randabschnitt (16) weist auf der Unterseite (18) einen umlaufenden Vorsprung (22) und radial innenliegend von dem Vorsprung (22) eine umlaufende Vertiefung (23) auf. Der Vorsprung (22) und die Vertiefung (23) bilden eine Hinterschneidung (24). Der Einkochglas-Deckel (14) wird auf einer IS-Maschine hergestellt, wobei auf einer Vorformseite der IS-Maschine eine vollständige Formgebung des Einkochglas-Deckels (14) erfolgt, während auf einer Fertigformseite der IS-Maschine keine Formgebung des Einkochglas-Deckels (14) durch ein Blasverfahren erfolgt. Die Erfindung betrifft auch einen auf diese Weise hergestellten Einkochglas-Deckel (14).

## Beschreibung

Ein Einkochglas-Deckel ist eine besondere Bauform eines Deckels, die beispielsweise für das dichte Verschließen eines Einkochglases verwendet wird. Hierbei wird der Einkochglas-Deckel nicht mit dem Einkochglas verschraubt. Vielmehr wird der Einkochglas-Deckel unter Zwischenordnung einer kreisringscheibenförmigen Dichtung auf einen Mündungsrand des Einkochglases aufgelegt und so mit dem Einkochglas verspannt, dass die Dichtung zwischen dem Einkochglas-Deckel und dem Einkochglas verpresst wird, um eine Dichtwirkung herbeizuführen. Hierbei kann die Anpressung des Einkochglas-Deckels mittels Spannklammern oder einem Spannbügel erzeugt und/oder gesichert werden. Wird das Einkochglas mit der Dichtung und dem Einkochglas-Deckel während eines Einkochprozesses verwendet, kann die Anpresskraft auch durch die Einkochbedingungen und einen während des Einkochprozesses in dem Einkochglas erzeugten Unterdruck erzeugt werden, und anschließend mit den Federklammern oder dem Federbügel eine zusätzliche Sicherung erfolgen. Die Federklammern oder der Federbügel umgreifen mit einer Vorspannung einen Randabschnitt des Einkochglas-Deckels und den Mündungsrand des Einkochglases.

Im Rahmen der Erfindung bezeichnet der Einkochglas-Deckel lediglich eine derartige Bauform mit einer Anlagefläche für eine Dichtung und/oder für einen Mündungsrand eines Glases, ohne dass zwingend eine Verwendung im Zusammenhang mit einem Einkochprozess erfolgen muss. Vielmehr sind auch beliebige andere Anwendungen denkbar, bei denen eine Abdichtung zwischen dem Einkochglas-Deckel und dem Einkochglas ohne einen Schraubvorgang herbeigeführt werden soll.

Die Erfindung betrifft einen Einkochglas-Deckel der zuvor beschriebenen Bauform sowie ein Verfahren zur Herstellung desselben.

### STAND DER TECHNIK

Die Druckschrift DE 32 18 717 C2 offenbart ein Einkochglas mit einem Einkochglas-Deckel, wobei diese Bauform üblicherweise als "Einweckglas" ("WECK" ist eine eingetragene Marke der AURELIUS IV GER AcquiCo Two GmbH nach Insolvenz der J. WECK GmbH & Co. KG) bezeichnet wird. Der Einkochglas-Deckel weist einen Randabschnitt auf, der mit einer Dichtung auf den Mündungsrand des Einkochglases aufgelegt werden kann. Des Weiteren weist der Einkochglas-Deckel einen Bodenabschnitt auf, der kreisscheibenförmig ausgebildet ist. Zwischen dem Randabschnitt und dem Bodenabschnitt ist ein Versatzabschnitt angeordnet derart, dass der Bodenabschnitt bei auf dem Mündungsrand des Einkochglases aufgelegtem Randabschnitt unterhalb des Mündungsrandes des Einkochglases angeordnet ist. Zur Verbesserung der Dichtwirkung zwischen dem Randabschnitt des Einkochglas-Deckels, der Dichtung und dem Mündungsrand des Einkochglases wird vorgeschlagen, dass der Randabschnitt des Einkochglas-Deckels auf der dem Mündungsrand des Einkochglases zugewandten Unterseite einen radial außenliegend angeordneten, in Umfangsrichtung umlaufenden wulstförmigen Vorsprung aufweist, was zur Folge hat, dass radial innenliegend von dem Vorsprung eine umlaufende Vertiefung ausgebildet ist. Der Vorsprung und die Vertiefung bilden eine radiale Hinterschneidung. Die Oberseite des Mündungsrandes verfügt über einen ebenfalls wulstartigen, umlaufenden Vorsprung, der unter Zwischenordnung der Dichtung in die Vertiefung des Einkochglas-Deckels eintritt. Diese Formgebung einerseits des Randbereichs des Einkochglas-Deckels und andererseits des Mündungsrandes des Einkochglases soll die Abdichtung verbessern und das Abziehen der Dichtung zum Lösen des Einkochglas-Deckels von dem Einkochglas vereinfachen.

### AUFGABE DER ERFINDUNG

Der Erfindung liegt die Aufgabe zugrunde, ein alternatives Verfahren zur Herstellung eines Einkochglas-Deckels vorzuschlagen. Des Weiteren liegt der Erfindung die Aufgabe zugrunde, einen Einkochglas-Deckel vorzuschlagen, der hinsichtlich der fertigungsbedingten Gestaltungsmerkmale verändert ist und/oder mit dem alternativen Verfahren zur Herstellung herstellbar ist.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt ein Verfahren vor, mit dem ein Einkochglas-Deckel herstellbar ist, der einen Bodenabschnitt, einen Versatzabschnitt und einen Randabschnitt aufweist. Hierbei ist der Bodenabschnitt vorzugsweise kreisscheibenförmig ausgebildet, wobei dieser eben geformt sein kann oder leicht domartig gewölbt sein kann. Der Versatzabschnitt kann hohlzylinderförmig oder auch mit einem leichten kegelstumpfförmigen Öffnungs- oder Schließwinkel ausgebildet sein. Der Randabschnitt kann kreisringförmig ausgebildet sein. Hierbei können die zuvor verwendeten Beschreibungen der Formen des Bodenabschnitts, Versatzabschnitts und Randabschnitts lediglich eine grobe erste Näherung darstellen, während durchaus variierende Querschnitte der Abschnitte vorhanden sein können oder auch im Großen oder im Kleinen Abweichungen gegenüber den beschriebenen Formen und zusätzliche Gestaltungsmerkmale wie Ausnehmungen, Vertiefungen, Rippen u. ä. vorhanden sein können.

Der erfindungsgemäß hergestellte Einkochglas-Deckel weist einen Randabschnitt auf, der auf der Unterseite einen umlaufenden Vorsprung aufweist. Der Vorsprung kann als eine Art Wulst ausgebildet sein. In einem Halblängsschnitt kann der Vorsprung eine konvexe Kontur aufweisen, die, zumindest in dem im weitesten vorspringenden Bereich, kreisbogenförmig oder beliebig anderweitig mit stetiger oder unstetiger Steigung geformt sein kann. Des Weiteren verfügt der Randabschnitt des erfindungsgemäß hergestellten Einkochglas-Deckels radial innenliegend von dem Vorsprung über eine umlaufende Vertiefung. Die Vertiefung kann im Halbquerschnitt konkav ausgebildet sein, wobei auch die Kontur der Vertiefung im Halblängsschnitt, zumindest in dem am weitesten vertieften Bereich oder in den Randbereichen, kreisbogenförmig oder beliebig anderweitig geformt sein kann mit stetigem oder unstetigem Verlauf der Steigung. Vorzugsweise bilden in dem genannten Halblängsschnitt der Vorsprung einerseits und die umlaufende Vertiefung (unter Umständen gemeinsam mit einem Teilbereich der äußeren Mantelfläche des Randabschnittes und/oder einer äußeren Mantelfläche des Versatzabschnitts) die Form einen liegenden S. Bei Betrachtung in radialer Richtung bilden der Vorsprung und die Vertiefung eine Hinterschneidung.

Herkömmliche Einkochglas-Deckel werden auf sogenannten Rundläufermaschinen hergestellt, bei denen ein Karussell mit einer Drehung unterschiedliche Arbeitsstellungen passiert. In einer ersten Arbeitsstellung gelangt der Glastropfen, der auch als Glasposten bezeichnet wird, in das Karussell. In den folgenden Arbeitsstellungen erfolgt dann mit kontinuierlicher Verdrehung des Karussells oder intermittierend die weitere Bearbeitung des Glaspostens zu dem Einkochglas-Deckel.

Keinen Einsatz fand bisher der Einsatz einer sogenannten IS-Maschine für Einkochglas-Deckel der hier vorliegenden Art, während aber eine Fertigung des Einkochglases mittels einer IS-Maschine erfolgt ist. Eine IS-Maschine ist eine "Individual Section Machine", also eine Maschine mit einzelnen Abschnitten. Eine IS-Maschine besteht aus einer Aneinanderreihung einzelner IS-Maschinen-Einheiten, die unabhängig voneinander Glasprodukte produzieren.

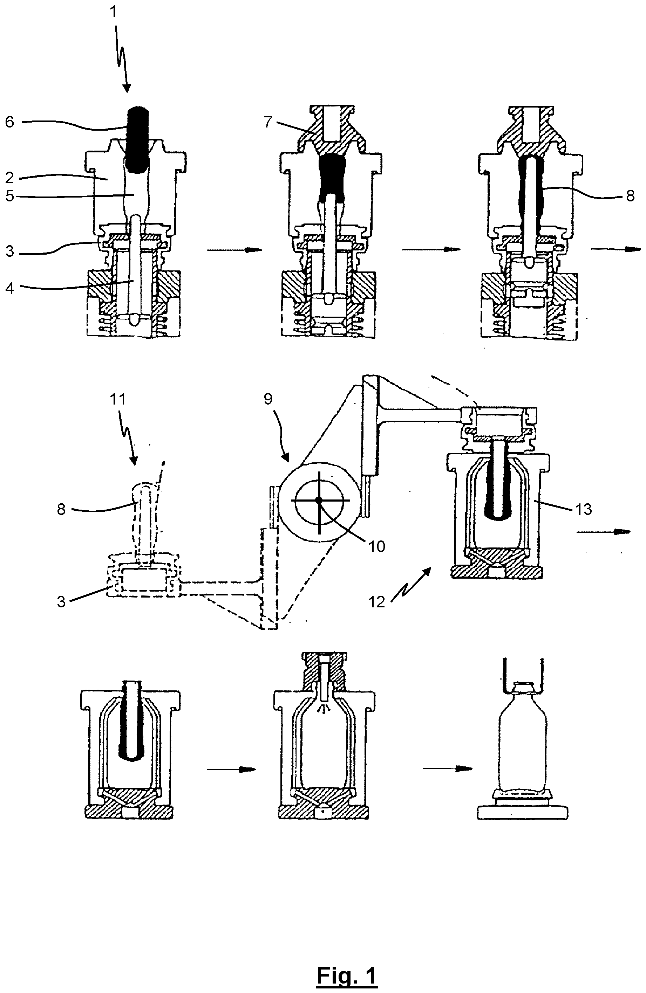

**Fig. 1** zeigt beispielhaft den Prozess einer Herstellung eines großvolumigen Glasflaschenkörpers mit einer IS-Maschine, wie dieser in der Patentanmeldung EP 1 621 524 A1 dargestellt und beschrieben ist:
Eine Vorform-Maschineneinheit 1 weist eine Vorform 2, die aus zwei Vorformhälften besteht, eine Mündungsform 3, die zwei Mündungsformhälften und einen Deckring aufweisen kann, und einen Presspegel 4 auf. Eine nach oben offene Kavität 5 ist durch die Vorform 2 und die Mündungsform 3 seitlich begrenzt, während eine untere Mündungsöffnung durch den Presspegel 4 verschlossen ist. Wie in dem ersten Bild von Fig. 1 zu erkennen ist, tropft ein Glasposten 6 in die Kavität 5. Die Kavität 5 wird dann gemäß dem zweiten Bild von Fig. 1 mit einem Vorformboden 7 verschlossen und der Presspegel 4 wird in die Kavität 5 hineinbewegt. In der Endstellung gemäß dem dritten Bild von Fig. 1 ist der Presspegel 4 so weit in die Kavität 5 eingetreten, dass der Zwischenraum zwischen der Begrenzung der Kavität 5 und dem Presspegel 4 vollständig mit dem Glasposten 6 gefüllt ist. Nach dieser ersten Formgebung ist aus dem Glasposten 6 ein sogenannter Külbel 8 hergestellt worden. In dem vierten Bild von Fig. 1 ist der Vorformboden 7 entfernt und die Halbschalen der Vorform 2 sind geöffnet und entfernt worden, während der Külbel 8 noch von der Mündungsform 3 gehalten wird. Die Mündungsform 3 mit dem daran gehaltenen Külbel 8 wird von einem Wechselmechanismus 9 gegriffen. Der Wechselmechanismus 9 überführt durch eine Verschwenkung um eine Schwenkachse 10 die Mündungsform 3 mit dem Glasposten 6 von einer Vorformseite 11, auf der die zuvor erläuterten Prozessschritte durchgeführt wurden und die erste Formgebung erfolgt ist, auf eine Fertigformseite 12. Hierbei wird die Mündungsform 3 mit dem Külbel 8 um 180° um die Schwenkachse 10 derart gewendet, dass die auf der Vorformseite 11 unter dem Külbel 8 angeordnete Mündungsform 3 auf der Fertigformseite 12 oberhalb des Külbels 8 angeordnet ist. Der Külbel 8 erstreckt sich auf der Fertigformseite 12 in eine Fertigform 13. Wie in den dann folgenden Abbildungen in Fig. 1 zu erkennen ist, wird dann auf der Fertigformseite 12 im Inneren des Külbels 8 ein größerer Druck erzeugt als in dem Zwischenraum zwischen dem Külbel und der Fertigform 13, was zur Folge hat, dass der Külbel 8 in einem zweiten Formgebungsprozess nach außen verformt wird, bis das Material des Külbels 8 an die Innenfläche der Fertigform 13 angepresst wird, sodass am Ende der zweiten Formgebung auf der Fertigformseite 12 die bestimmungsgemäße Form, hier einer großbauchigen Glasflasche, erreicht ist. Ziel des ersten Formgebungsschrittes auf der Vorformseite ist es, einen Külbel zu erzeugen, bei dem das Glasmaterial bereits so verteilt ist, dass sich mit dem blasenden zweiten Formgebungsschritt auf der Fertigformseite die gewünschten Wandstärken des Produkts, beispielsweise größere Wandstärken im Bereich der Mündung und/oder des Bodens als im Bereich der Seitenflächen, ergeben. Hinsichtlich weiterer Informationen zu der Fertigung von großvolumigen Glasprodukten mittels einer IS-Maschine wird insbesondere auf die Druckschriften DE 10 2004 036 343 B4, DE 10 2021 004 257 und WO 2015/001347A1 A1 verwiesen.

Die Erfindung schlägt erstmalig vor, den Einkochglas-Deckel, wie dieser zuvor beschrieben worden ist, auf einer IS-Maschine herzustellen. Zu diesem Zweck nutzt die Erfindung die IS-Maschine nicht bestimmungsgemäß, da zwar auf einer Vorformseite der IS-Maschine eine Formgebung des Einkochglas-Deckels erfolgt. Allerdings erfolgt dann anschließend auf der Fertigformseite der IS-Maschine keine Formgebung des Einkochglas-Deckels durch ein Blasverfahren, wobei vorzugsweise auf der Fertigformseite auch kein Pressformverfahren oder eine anderweitige gezielte kontaktbasierte Formgebung erfolgt (wovon wärmebedingte Verformungen wie eine Schrumpfung mit der Abkühlung oder Formänderungen infolge der Abkühlung, infolge des Eigengewichts oder infolge von Eigenspannungen nicht umfasst sind). Anders gesagt nutzt die Erfindung die IS-Maschine lediglich für einen einzigen Formgebungsschritt, der auf der Vorformseite ausgeführt wird. Auf der Vorformseite wird erfindungsgemäß ein Külbel erzeugt, der die endgültige Form des fertigen Einkochglas-Deckels hat.

Wird ein Einkochglas, für den der Einkochglas-Deckel bestimmt ist, ohnehin mit einer IS-Maschine hergestellt, kann erfindungsgemäß auch der Einkochglas-Deckel auf derselben IS-Maschine hergestellt werden, sodass keine separaten Produktionsstätten und unterschiedliche Maschinentypen für die Herstellung einerseits des Einkochglases und andererseits des Einkochglas-Deckels bereitgestellt und genutzt werden müssen. Möglich ist auch, dass mit der Erweiterung der Herstellungsmöglichkeiten der IS-Maschine derart, dass auch der hier in Rede stehende Einkochglas-Deckel gefertigt werden kann, der Auslastungsgrad der IS-Maschine verbessert wird, indem an der IS-Maschine sowohl Produkte mit einem Press-Blas-Verfahren als auch das erfindungsgemäße Verfahren durchgeführt werden können zur Herstellung entsprechender unterschiedlicher Produkte.

Üblicherweise erfolgt in einer IS-Maschine die erste Formgebung nicht nur im Bereich der Mündungsform, sondern auch im Bereich der Vorform. Die Erfindung schlägt für eine Ausführungsform vor, dass zwar eine Vorform, unter Umständen auch mit zwei Vorformhälften, vorhanden ist. Die Vorform ist aber dann an der Formgebung auf der Vorformseite überhaupt nicht beteiligt. Vielmehr erfolgt dann die Formgebung des Einkochglas-Deckels ausschließlich durch einen Presspegel, einen Deckring, zwei Mündungsformhälften und einen Vorformboden. Die Vorformhälften können dann vorhanden sein, um eine Adaption des Herstellungsprozesses an die IS-Maschine überhaupt erst zu ermöglichen. Alternativ oder kumulativ möglich ist, dass die Vorformhälften genutzt werden können, um den Vorformboden im Inneren aufzunehmen und ggf. zu führen. Für einen Vorschlag der Erfindung weisen die Vorformhälften Halter auf, welche die Mündungsformhälften umgreifen, sodass die Vorformhälften dazu dienen können, die Mündungsformhälften während der Formgebung auf der Vorformseite zusammenzuhalten.

Eine besondere Bedeutung kann der Lage etwaiger Formgrate zukommen, dies im Bereich von Spalten zwischen den einzelnen Formteilen gebildet werden. Möglich ist, dass die Lage der Formgrate eine Bedeutung für die spätere Verwendung des Einkochglas-Deckels hat. Andererseits müssen die Übergänge zwischen den Formteilen derart gewählt werden, dass auch eine Entformung der Formteile zum Freigeben des Einkochglas-Deckels auf der Vorformseite möglich ist.

Für einen Vorschlag der Erfindung wird in dem Verfahren zur Herstellung des Einkochglas-Deckels ein umlaufender Vorsprung-Formgrat des Einkochglas-Deckels im Bereich eines Übergangs von den Mündungsformhälften (insbesondere von einer Formnase der Mündungsformhälften) zu dem Vorformboden gebildet. Ein derartiger umlaufender Vorsprung-Formgrat kann entlang des Vorsprungs der Unterseite des Randabschnitts des Einkochglas-Deckels verlaufen, wobei der Vorsprung-Formgrat in einem Halblängsschnitt vorzugsweise an dem am weitesten vorspringenden Punkt der Kontur des Vorsprungs angeordnet ist. In diesem Fall ist möglich, dass die Mündungsformhälften (insbesondere mit einem Formabschnitt einer Formnase) den Vorsprung auf der radial außenliegenden Seite von dem am weitesten vorspringenden Punkt formen, während der Bereich des Vorsprungs und die Vertiefung radial innenliegend von dem am weitesten vorspringenden Punkt des Vorsprungs von dem Vorformboden geformt werden. Da der Vorformboden nicht in radialer Richtung entformt wird, sondern in Richtung einer Symmetrie- oder Längsachse des Einkochglas-Deckels, kann diese Seite des Vorsprungs einschließlich der Vertiefung und der gebildeten Hinterschneidung von dem Vorformboden geformt werden und es ist ein kollisionsfreies Entformen möglich.

Alternativ oder kumulativ kann in dem erfindungsgemäßen Verfahren ein umlaufender Presspegel-Formgrat des Einkochglas-Deckels von einem Übergang des Deckrings (insbesondere einer Panzerung des Deckrings) zu dem Presspegel gebildet werden. Ein derartiger Presspegel-Formgrat kann im Bereich des Übergangs von dem Randabschnitt des Einkochglas-Deckels zu dem Versatzabschnitt des Einkochglas-Deckels angeordnet sein.

Alternativ oder kumulativ kann ein umlaufender Deckring-Formgrat des Einkochglas-Deckels im Bereich eines Übergangs des Deckrings (insbesondere einer Panzerung des Deckrings) zu den Mündungsformhälften (insbesondere einer Formnase der Mündungsformhälften) gebildet werden. Dieser umlaufende Deckring-Formgrat kann dann im Bereich des Übergangs von der Oberseite des Randabschnitts zu einer äußeren Mantelfläche des Randabschnitts an dem Einkochglas-Deckel ausgebildet sein.

Alternativ oder zusätzlich können in dem erfindungsgemäßen Verfahren zwei Mündungsformhälften-Formgrate des Einkochglas-Deckels im Bereich eines Übergangs zwischen den beiden Mündungsformhälften im Bereich der aneinander anschließenden Stirnseiten der Mündungsformhälften, deren Flächennormalen in Umfangsrichtung orientiert sind, gebildet werden. Diese Mündungsformhälften-Formgrate sind dann parallel zur Symmetrie- oder Längsachse des Einkochglas-Deckels orientiert und vorzugsweise diametral gegenüberliegend an einer äußeren Mantelfläche des Randabschnitts gebildet. Diese Mündungsformhälften-Formgrate können sich bis zu dem zuvor erläuterten umlaufenden Vorsprung-Formgrat erstrecken und in diesen übergehen.

Durchaus möglich ist, dass im Rahmen der Erfindung zumindest auch eine Formgebung des Materials durch eine Bewegung des Presspegels herbeigeführt wird. Für einen Vorschlag der Erfindung erfolgt auf der Vorformseite die Formgebung des Einkochglas-Deckels ausschließlich durch eine Bewegung des Vorformbodens, während keine Bewegung des Presspegels, des Deckrings und der beiden Mündungsformhälften erfolgt. Somit können Relativbewegungen zwischen Presspegel, Deckring und den beiden Mündungsformhälften vermieden werden, was die Anforderungen hinsichtlich der Toleranzen und der Spalte zwischen diesen formgebenden Komponenten verringern kann. Möglich ist, dass bei einer derartigen Ausführungsform des erfindungsgemäßen Verfahrens der Presspegel zunächst in die Kavität in seine bestimmungsgemäße Position eingefahren wird und dann diese Endstellung beibehält. In dieser Endstellung trifft dann der Glasposten auf den Presspegel. Ohne dass der Presspegel, der Deckring und die Mündungsformhälften dann bewegt werden, erfolgt die Bewegung des Vorformbodens in Richtung des Presspegels mit der Verpressung des Glasmaterials des Glaspostens zwischen Presspegel und Vorformboden.

Für das bekannte Verfahren zur Nutzung einer IS-Maschine muss ein Wechsel von der Vorformseite zu der Fertigformseite erfolgen, bevor eine Aushärtung des Postens derart erfolgt ist, dass eine zweite Formgebung durch die in der Fertigform erzeugten Druckunterschiede nicht mehr möglich ist. Hingegen erfolgt für eine Ausgestaltung des erfindungsgemäßen Verfahrens eine Abkühlung des Külbels auf der Vorformseite in einem derartigen Ausmaß, dass eine zumindest teilweise Aushärtung des Materials des Einkochglas-Deckels erfolgt, die keine weitere fließende oder blasende Formgebung mehr möglich machen würde, was im Rahmen des erfindungsgemäßen Verfahrens auch nicht erforderlich ist, da die Formgebung bereits auf der Vorformseite abgeschlossen worden ist. Vorzugsweise erfolgt ein Wechsel des Külbels, der bereits die endgültige Form des Einkochglas-Deckels aufweist, von der Vorformseite zu der Fertigformseite bei einer Temperatur des Glasmaterials von weniger als 1.100°C, weniger als 1.000°C, weniger als 950°C, weniger als 900°C, weniger als 850°C, weniger als 800°C oder sogar weniger als 750°C. Eine derartige Abkühlung des Materials des Einkochglas-Deckels auf der Vorformseite kann herbeigeführt werden, indem der Vorformboden und/oder der Presspegel gekühlt werden, wozu ein Kühlkreislauf durch den Vorformboden geführt sein kann und/oder im Inneren des Presspegels ein Kühlpegel angeordnet sein kann, über den der Presspegel im Bereich seiner Innenseite mit einem kühlenden Fluid beaufschlagt wird. Möglich ist alternativ oder kumulativ, dass eine Abkühlung durch die Verweildauer des Einkochglas-Deckels auf der Vorformseite gewährleistet wird.

Für einen weiteren Vorschlag der Erfindung findet in dem erfindungsgemäßen Verfahren ein Vorformboden Einsatz, der zumindest teilweise aus einem Bronzematerial hergestellt ist. Auf der Vorformseite kann dem Material des Einkochglas-Deckels über das Bronzematerial Wärme entzogen werden. Möglich ist einerseits, dass das Entziehen der Wärme über eine hohe Wärmekapazität des Bronzematerials erfolgt. Andererseits kann die hohe Wärmeleitfähigkeit des Bronzematerials genutzt werden, um die Wärme abzuführen, beispielsweise dadurch, dass das Bronzematerial einerseits mit dem Material des Einkochglas-Deckels und andererseits mit einem Kühlkreislauf in Wärmeaustausch steht.

Grundsätzlich kann der Deckring beliebig ausgebildet sein, beispielsweise aus einem durchgehenden Material, als Verbundkörper, aus einem Gussmaterial u. ä. Für einen besonderen Vorschlag der Erfindung weist der Deckring einen Grundkörper und eine Panzerung auf. In diesem Fall ist der Deckring ausschließlich im Bereich der Panzerung an der Formgebung des Einkochglas-Deckels beteiligt. Erfindungsgemäß können unterschiedliche Materialen einerseits für den Grundkörper und andererseits für die Panzerung verwendet werden, um die Materialien gezielt an die jeweiligen Anforderungen anzupassen. Vorzugsweise wird für die Panzerung ein besonders hartes, verschleißfestes und/oder wärmebeständiges Material und/oder ein Material mit den gewünschten Hafteigenschaften für das Material des Einkochglas-Deckels gewählt. Der Grundkörper und die Panzerung können dabei beliebig miteinander verbunden sein. Vorzugsweise sind der Grundkörper und die Panzerung stoffschlüssig miteinander verbunden, wobei auch der Grundkörper an die Panzerung angespritzt sein kann (oder umgekehrt) oder diese miteinander verschweißt sein können. Vorzugsweise besteht der Grundkörper aus einem Gussmaterial, während die Panzerung aus einem Hartmaterial besteht. Die Panzerung kann auch eine Beschichtung aufweisen.

In dem erfindungsgemäßen Verfahren kann nach Beendigung der Formgebung auf der Vorformseite (und einem etwaigen Abkühlen) ein Wechselmechanismus den in den Mündungsformhälften gehaltenen Einkochglas-Deckel von der Vorformseite der IS-Maschine zu einer Fertigformseite der IS-Maschine bewegt. Während dieser Bewegung erfolgt das Wenden der Mündungsformhälften mit dem daran gehaltenen Einkochglas-Deckel um einen Winkel von 180° um die Schwenkachse des Wechselmechanismus. In einem nächsten Verfahrensschritt erfolgt dann das Öffnen der Mündungsformhälften, wodurch der Einkochglas-Deckel mit der Unterseite des Randabschnitts und/oder der Unterseite des Bodenabschnitts auf einem Fertigformhalter abgelegt wird. Nach einer Verweildauer des Einkochglas-Deckels, während welcher eine weitere Kühlung des Einkochglas-Deckels durch den Fertigformhalter erfolgen kann und während welcher keine weitere Formgebung erfolgt, wird dann der Einkochglas-Deckel über ein Entnahmewerkzeug von dem Fertigformhalter entfernt. Mittels des Entnahmewerkzeugs kann dann der Einkochglas-Deckel beispielsweise einer Abfördereinrichtung wie einem Förderband zugeführt werden.

Möglich ist, dass eine multifunktionale Nutzung ein und derselben IS-Maschine erfolgt, indem diese IS-Maschine für die Herstellung erster Produkte und von den ersten Produkten abweichender zweiter Produkte genutzt wird: In einer ersten Produktionsphase werden als erste Produkte Einkochglas-Deckel auf der IS-Maschine mit einem Verfahren hergestellt, wie dieses zuvor beschrieben worden ist. Während dieser ersten Produktionsphase erfolgt auf einer Fertigformseite der IS-Maschine keine Formgebung des Einkochglas-Deckels durch ein Blasverfahren, sodass die grundsätzliche Kapazität der IS-Maschine auf der Fertigformseite für die Durchführung eines Blasverfahrens überhaupt nicht genutzt wird. Wurde in der ersten Produktionsphase eine hinreichende Zahl erster Produkte, nämlich eine ausreichende Zahl von Einkochglas-Deckeln, hergestellt, erfolgt eine Umstellung des Betriebs der IS-Maschine für eine zweite Produktionsphase. In der zweiten Produktionsphase werden als zweite Produkte Glasprodukte auf der IS-Maschine hergestellt. Bei der Herstellung dieser Glasprodukte erfolgt dann eine blasende Formgebung auf der Fertigformseite der IS-Maschine. In der zweiten Produktionsphase werden somit die Möglichkeiten der IS-Maschine auf der Fertigformseite für eine zweite, blasende Formgebung genutzt. Vorzugsweise handelt es sich bei den zweiten Produkten um großvolumige oder bauchige Glasprodukte wie ein Einkochglas, eine Flasche u. ä.

Eine weitere Lösung der der Erfindung zugrunde liegenden Aufgabe stellt ein Einkochglas-Deckel dar, der einen Bodenabschnitt, einen Versatzabschnitt und einen Randabschnitt aufweist, wobei der Randabschnitt auf der Unterseite einen umlaufenden Vorsprung und radial innenliegend von dem Vorsprung eine umlaufende Vertiefung aufweist. Der Vorsprung und die Vertiefung bilden eine Hinterschneidung. Erfindungsgemäß verfügt der Randabschnitt des Einkochglas-Deckels für eine erste Variante an dem am weitesten vorspringenden Punkt der Kontur des Vorsprungs in einem Halblängsschnitt über einen umlaufenden Vorsprung-Formgrat, der unter Umständen vorteilhaft für den Kontakt des Einkochglas-Deckels mit der Dichtung und/oder das Verpressen der Dichtung zwischen dem Randabschnitt des Einkochglas-Deckels und dem Mündungsrand des Einkochglases ist. Alternativ oder kumulativ kann der umlaufende Vorsprung-Formgrat aus der Nutzung des zuvor beschriebenen erfindungsgemäßen Verfahrens resultieren. Für eine zweite (alternative oder kumulative) Variante weist der Einkochglas-Deckel zwei Mündungsformhälften-Formgrate auf, die parallel zur Längs- oder Symmetrieachse orientiert sind und diametral gegenüberliegend an einer äußeren Mantelfläche des Randabschnitts angeordnet sein können. Vorzugsweise erstrecken sich diese beiden Mündungsformhälften-Formgrate jeweils bis zu dem umlaufenden, zuvor genannten Vorsprung-Formgrat.

Der Einkochglas-Deckel kann beliebige weitere Formgrate aufweisen.

Für einen Vorschlag der Erfindung weist der Einkochglas-Deckel einen umlaufenden Presspegel-Formgrat auf, der im Bereich des Übergangs des Randabschnitts zu dem Versatzabschnitt angeordnet sein kann.

Alternativ oder kumulativ kann der Einkochglas-Deckel einen umlaufenden Deckring-Formgrat aufweisen, der an einem Übergang einer Oberseite des Randabschnitts zu einer äußeren Mantelfläche des Randabschnitts angeordnet sein kann.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch einen Prozess für eine Herstellung eines großvolumigen Glasproduktes mit einer IS-Maschine gemäß dem Stand der Technik.
- **Fig. 2**: zeigt einen Einkochglas-Deckel in einer räumlichen Ansicht schräg von unten.
- **Fig. 3**: zeigt den Einkochglas-Deckel gemäß Fig. 2 in einem Längsschnitt bei Schnittführung entlang einer Längs- und Symmetrieachse.
- **Fig. 4**: zeigt den Einkochglas-Deckel gemäß Fig. 2 und 3 in einem Detail IV.
- **Fig. 5a, 5b**: zeigen einen Längsschnitt durch eine Vorformeinheit, wobei in Fig. 5a einzelne Komponenten mit unterschiedlichen Graustufen dargestellt sind und in Fig. 5b den Komponenten Bezugsziffern zugeordnet sind.
- **Fig. 6**: zeigt die Vorformeinheit gemäß Fig. 5a, 5b in einer räumlichen Explosionsdarstellung.
- **Fig. 7**: zeigt in einer räumlichen Ansicht einen Kühlpegel der Vorformeinheit gemäß Fig. 5a, 5b und 6.
- **Fig. 8**: zeigt den Kühlpegel gemäß Fig. 7 in einem Längsschnitt.
- **Fig. 9**: zeigt einen Presspegel der Vorformeinheit gemäß Fig. 5a, 5b und 6 in einer räumlichen Ansicht.
- **Fig. 10**: zeigt den Presspegel gemäß Fig. 9 in einem Längsschnitt.
- **Fig. 11**: zeigt eine Mündungsform der Vorformeinheit gemäß Fig. 5a, 5b und 6 mit zwei miteinander montierten Mündungsformhälften in einer räumlichen Ansicht schräg von oben.
- **Fig. 12**: zeigt die Mündungsform gemäß Fig. 11 mit voneinander demontierten Mündungsformhälften in einer räumlichen Ansicht schräg von oben.
- **Fig. 13**: zeigt einen Deckring der Vorformeinheit gemäß Fig. 5a, 5b und 6 in einer räumlichen Ansicht schräg von oben.
- **Fig. 14**: zeigt den Deckring gemäß Fig. 13 in einem Längsschnitt.
- **Fig. 15**: zeigt eine Vorform der Vorformeinheit gemäß Fig. 5a, 5b und 6 mit zwei miteinander montierten Vorformhälften in einer räumlichen Ansicht schräg von oben.
- **Fig. 16**: zeigt die Vorform gemäß Fig. 15 mit voneinander demontierten Vorformhälften in einer räumlichen Ansicht schräg von oben.
- **Fig. 17**: zeigt einen Vorformboden der Vorformeinheit gemäß Fig. 5a, 5b und 6 in einer räumlichen Ansicht schräg von oben.
- **Fig. 18**: zeigt in einer räumlichen Explosionsdarstellung eine Fertigformeinheit mit einem Einkochglas-Deckel und einem Entnahmewerkzeug.
- **Fig. 19**: zeigt die Fertigformeinheit gemäß Fig. 18 mit dem Einkochglas-Deckel und dem den Einkochglas-Deckel greifenden Entnahmewerkzeug in einem Längsschnitt.
- **Fig. 20**: zeigt beispielhaft einen Verfahrensablauf für eine Herstellung eines Einkochglas-Deckels mit einer IS-Maschine.

### FIGURENBESCHREIBUNG

In der folgenden Figurenbeschreibung wird teilweise für Bauelemente oder Merkmale, die sich hinsichtlich der Gestaltung und/oder Funktion entsprechen oder ähneln, dieselbe Bezugszahl verwendet, wobei dann diese Bauelemente oder Merkmale durch einen zusätzlichen Buchstaben a, b voneinander unterschieden sein können. Auf diese Bauelemente oder Komponenten kann dann auch mit der Bezugszahl ohne Verwendung des zusätzlichen Buchstabens Bezug genommen sein, womit dann eines oder eine beliebige Anzahl dieser Bauelemente oder Merkmale gemeint sein können.

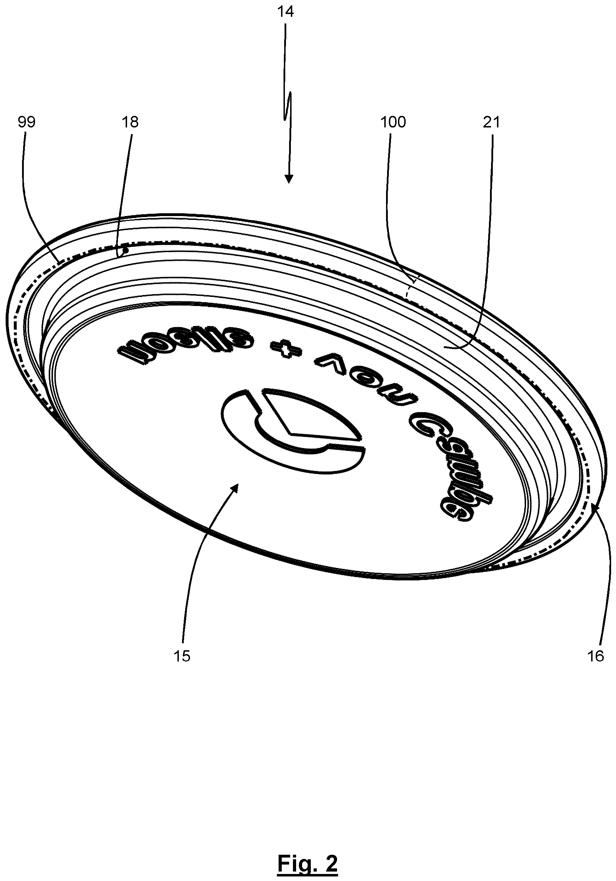

**Fig. 2****3 und 4** zeigen einen Einkochglas-Deckel 14. Der Einkochglas-Deckel 14 verfügt über einen Bodenabschnitt 15. Der Bodenabschnitt 15 ist in erster Näherung kreisscheibenförmig ausgebildet, wobei für das dargestellte Ausführungsbeispiel der Bodenabschnitt 15 eine geringfügige domartige Wölbung nach oben aufweist. Des Weiteren verfügt der Einkochglas-Deckel 14 über einen Randabschnitt 16. Der Randabschnitt 16 ist in erster Näherung kreisringscheibenförmig ausgebildet. Der Randabschnitt 16 verfügt über eine ebene Oberseite 17 und eine Unterseite 18 sowie eine radial außenliegende zylindrische Mantelfläche 19, die im Bereich der Ecken abgerundet sein kann. Radial innenliegend kann der Randabschnitt 16 eine in Umfangsrichtung umlaufende Stufe 20 aufweisen. Der Bodenabschnitt 15 und der Randabschnitt 16 sind über einen Versatzabschnitt 21 miteinander so verbunden, dass der Randabschnitt 16 oberhalb des Bodenabschnitts 15 angeordnet ist. Vorzugsweise ist der am Weitesten unten liegende Punkt des Randabschnitts 16 ungefähr in der Höhe des höchsten Punktes des Bodenabschnitts 15 angeordnet. Möglich ist, dass die Ecken, an denen der Versatzabschnitt 21 in den Bodenabschnitt 15 übergeht, abgerundet oder abgeschrägt sind. Das Entsprechende kann für den Übergang des Versatzabschnitts 20 zu dem Randabschnitt 16 gelten. Die Form des Einkochglas-Deckels 14 kann bspw. als umgekehrte Hutform, bei der der Randabschnitt 16 die Hutkrempe bildet, oder auch als Diskus-Form bezeichnet werden.

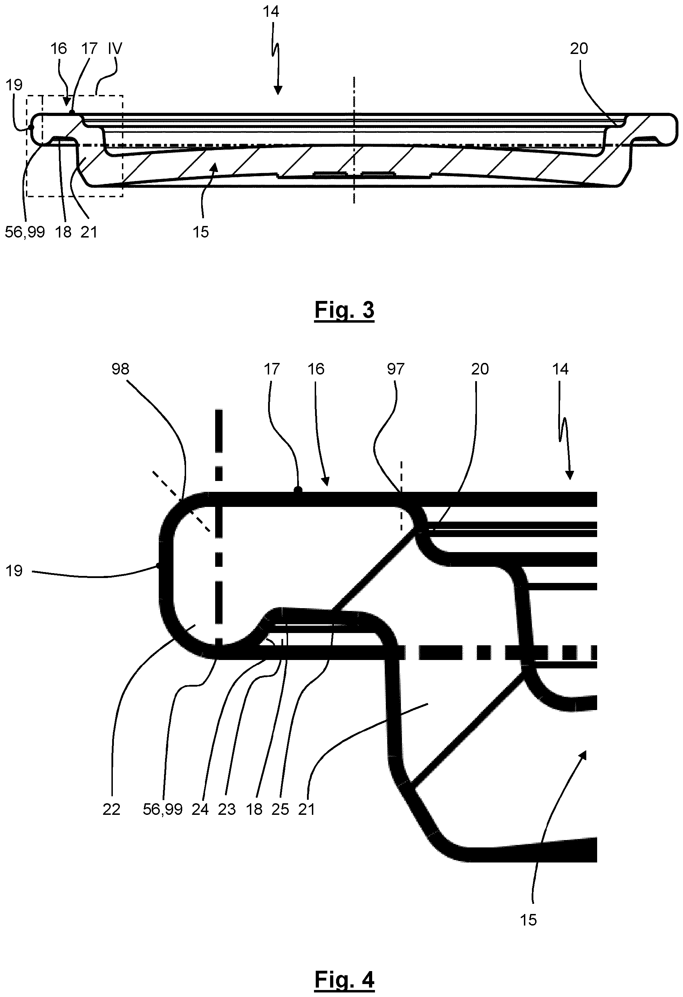

In dem Detail IV gemäß Fig. 4 ist zu erkennen, dass die Unterseite 18 des Randabschnitts 16 nicht eben ausgebildet ist. Vielmehr weist die Kontur der Unterseite 18 des Randabschnitts 16 in einem Halblängsschnitt radial außenliegend und unmittelbar an die Mantelfläche 19 anschließend einen in Umfangsrichtung umlaufenden Vorsprung 22 auf, an den radial nach innen eine ebenfalls in Umfangsrichtung umlaufende Vertiefung 23 unmittelbar anschließt. Der Vorsprung 2 und die Vertiefung 23 bilden eine Hinterschneidung 24. Wird die Vertiefung 23 von einem Formwerkzeug geformt, kann in Folge der gebildeten Hinterschneidung 24 das Formwerkzeug nicht radial nach außen von dem Einkochglas-Deckel 14 entformt werden. In grober Vereinfachung bildet die in Fig. 4 dargestellte Kontur der Unterseite 18 in dem Halblängsschnitt und Detail IV die Form eines liegenden S, wobei eine Hälfte des S von dem Vorsprung 22 ausgebildet ist, während die andere Hälfte des S von der Vertiefung 23 ausgebildet ist.

Für das dargestellte Ausführungsbeispiel verfügt der Vorsprung 22 über eine Kontur mit einer stetigen Krümmung, wobei der Vorsprung 22 vorzugsweise eine Kontur mit einem konstanten Radius aufweist. Die Vertiefung 23 kann einen geradlinigen Boden 25 ausweisen, wobei der Boden 25 auch wie dargestellt gegenüber einer quer zu der Längsachse orientierten Querebene in eine Richtung radial nach innen um einen kleinen Winkel nach unten geneigt sein kann.

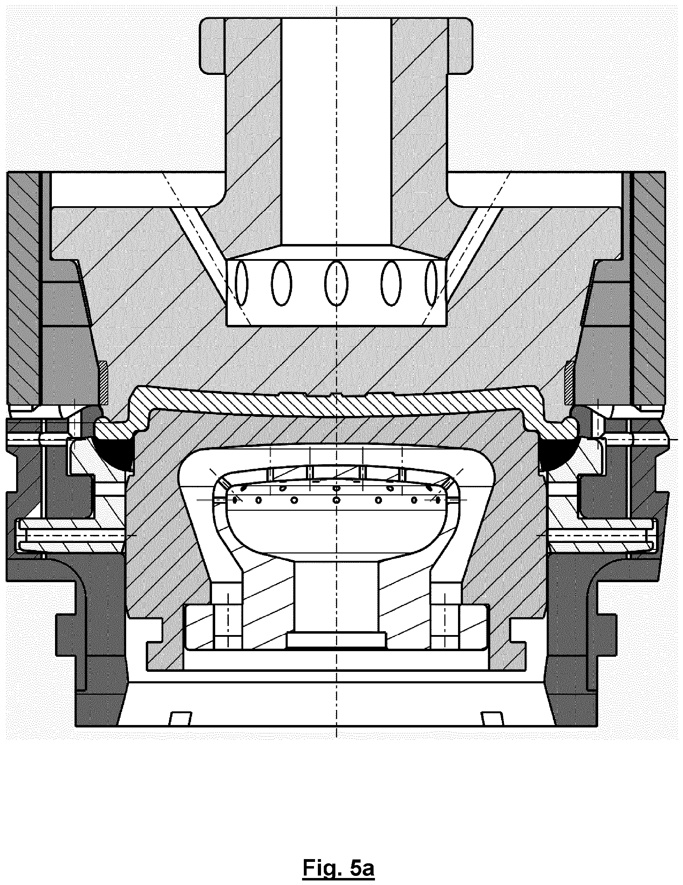

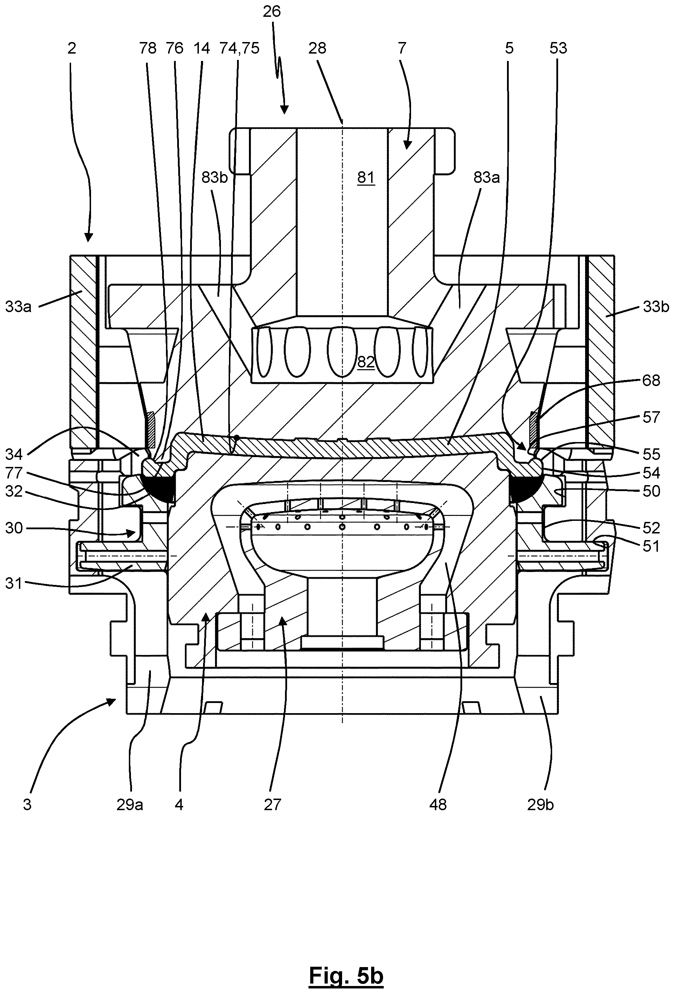

**Fig. 5a****,** **5b** zeigen einen Längsschnitt durch eine Vorformeinheit 26, die zur Herstellung und abschließenden Formgebung eines Einkochglas-Deckels 14 Einsatz findet auf einer Vorformseite 11 einer Vorform-Maschineneinheit 1.

In Fig. 5a sind die unterschiedlichen Komponenten, die ein- oder mehrteilig ausgebildet sein können, farblich voneinander unterschieden.

Die Vorformeinheit 26 verfügt über einen Kühlpegel 27, der im Inneren eines Presspegels 4 angeordnet ist und zur Kühlung des Presspegels 4 dient. Der Kühlpegel 27 und der Presspegel 4 sind gemeinsam in der Mündungsform 3 verschieblich und in Richtung der Längsachse 28 geführt.

Die Mündungsform 3 weist Mündungsformhälften 29a, 29b und einen im Inneren der Mündungsform 3 gehaltenen Deckring 30 auf.

Der Deckring 30 weist einen Grundkörper 31 und eine Panzerung 32 auf. Von oben auf die Mündungsform 3 ist eine Vorform 2 aufgesetzt, welche zwei Vorformhälften 33a, 33b aufweist.

In der Vorform 2 ist der Vorformboden 7 in Richtung der Längsachse 28 beweglich oder geführt.

Eine Kavität 5 ist in der in Fig. 5a, 5b dargestellten Endstellung, in der der Einkochglas-Deckel 14 fertig geformt ist, begrenzt durch die Unterseite des Vorformbodens 7, eine umlaufende Formnase 34 der Mündungsformhälften 29a, 29b, die Panzerung 32 des Deckrings 30 und eine Oberseite 43 des Presspegels 4.

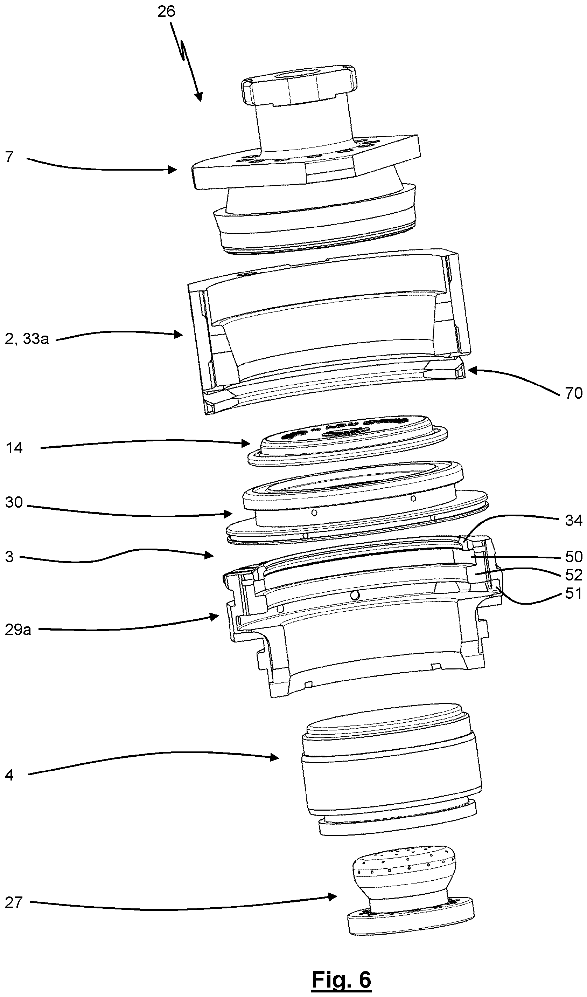

**Fig. 6** zeigt eine räumliche Explosionsdarstellung der Vorformeinheit 26 mit dem Kühlpegel 27, dem Presspegel 4, der Mündungsform 3, von der hier lediglich eine Mündungsformhälfte 29a und der Deckring 30 dargestellt sind, der Vorform 2, die hier lediglich mit einer Vorformhälfte 33a dargestellt ist, und dem Vorformboden 7.

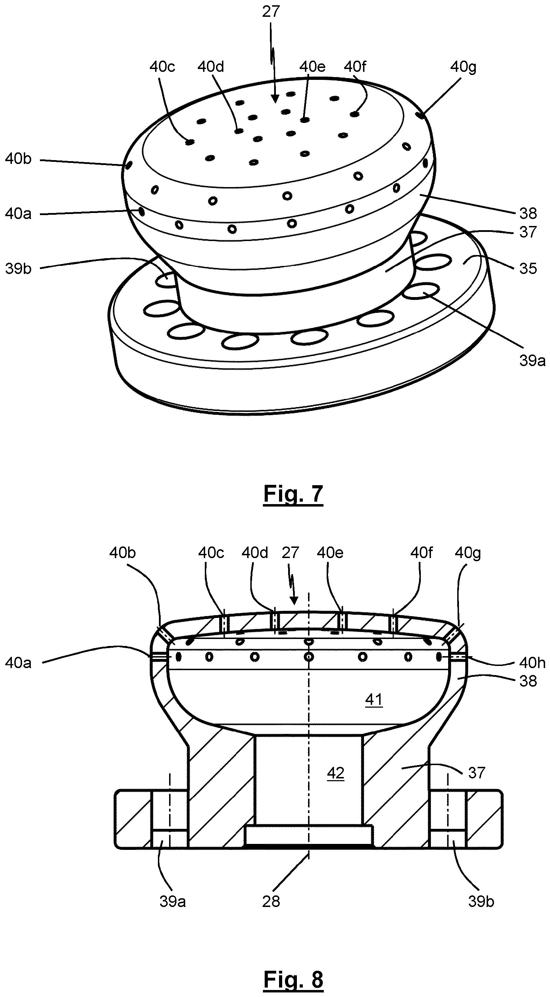

**Fig. 7 und 8** zeigen den Kühlpegel 27. Der Kühlpegel 27 verfügt über einen Ringbund 35. Mit dem Ringbund 35 ist der Kühlpegel 27 an einer Stufe 36 des Presspegels 4 abgestützt. Von dem Ringbund 35 geht ein zylindrischer Zwischenabschnitt 35 aus, der einen balligen Endabschnitt 38 trägt. Der Endabschnitt 38 ist in der unteren Hälfte in grober Näherung kugelförmig ausgebildet, während die obere Hälfte abgeflacht ist und lediglich geringfügig domartig gewölbt ist. Im Bereich des Ringbunds 35 verfügt der Kühlpegel 27 über erste Kanäle 39, die als gleichmäßig über den Umfang des Ringbunds 35 verteilt angeordnete Durchgangsbohrungen ausgebildet sind. Im Bereich seiner Oberseite verfügt der Endabschnitt 38 über Bohrungen 40, die fluidisch mit einem großvolumigen Innenraum 41 des Endabschnitts 38 sowie einem zweiten Kanal 42, der sich bis zum Boden des Kühlpegels 27 erstreckt, verbunden sind. Im Bereich des Endabschnitts 38 verfügt der Kühlpegel 27 über eine ungefähr konstante Wandstärke, so dass der Innenraum 41 im unteren Teil in grober Näherung kugelförmig ausgebildet ist, während dieser im oberen Bereich leicht domförmig gewölbt ist. Die Bohrungen 40 im Bereich der Oberseite des Endabschnitts 38 sind parallel zur Längsachse 28 orientiert, während im Seitenbereich des Endabschnitts 38 gegenüber der Längsachse 28 geneigte Bohrungen 40 vorhanden sind.

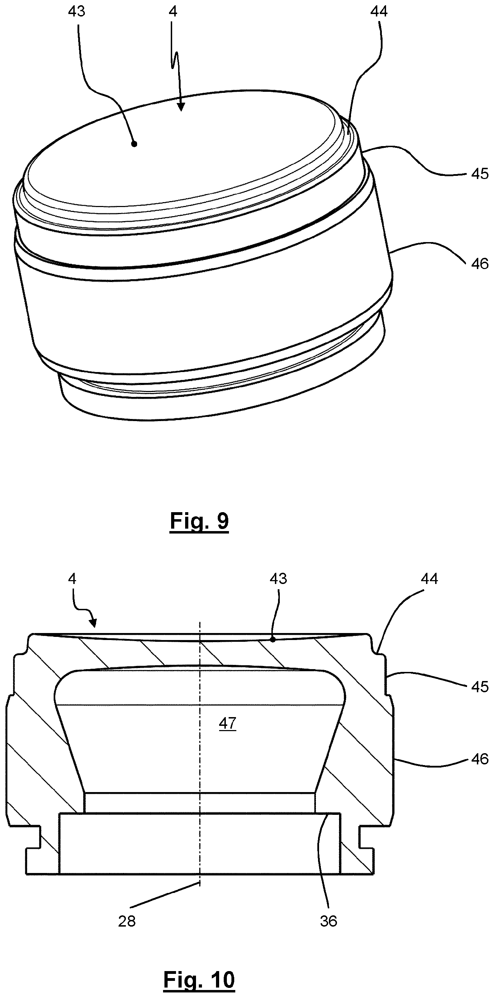

**Fig. 9** und **10** zeigen den Presspegel 4. Die Oberseite 43 ist geringfügig konkav gewölbt, wobei die Wölbung der Oberseite 43 der Wölbung der Oberseite des Bodenabschnitts 15 des Einkochglas-Deckels 14 entspricht. Im seitlichen Randbereich weist die Oberseite 43 des Presspegels 4 eine umlaufende Stufe 44 auf, die der Stufe 20 des Einkochglas-Deckels 14 entspricht. Unterhalb der Stufe 44 verfügt die Mantelfläche des Presspegels 4 über einen ersten Zylinderabschnitt 45 und einen hieran über eine kleine Stufe sowie eine umlaufende Fase anschließenden zweiten Zylinderabschnitt 46 mit geringfügig gegenüber dem ersten Zylinderabschnitt 45 vergrößertem Durchmesser. Der Presspegel 4 verfügt über einen an die Stufe 36 anschließenden Innenraum 47, dessen Form derart an die Außengeometrie des Kühlpegels 27 angepasst ist, dass sich zwischen dem Presspegel 4 und dem Kühlpegel 27 ein umlaufender Zwischenraum 48, vorzugsweise mit ungefähr konstanter Zwischenraumhöhe, ergibt (vgl. Fig. 5b). Zur Kühlung des Presspegels 4 kann ein Kühlfluid eines Kühlkreislaufes, insbesondere Luft, durch den Kanal 42, den Innenraum 41 und die Bohrungen 40 des Kühlpegels 27 in den Zwischenraum 48 strömen, wobei der Strom dann auf die Innenfläche des Innenraums 47 des Presspegels 4 trifft und Wärme von dem Presspegel 4 abführt. Das Fluid kann dann von dem Zwischenraum 48 über die ersten Kanäle 39 wieder abgeführt werden. Durchaus möglich ist aber auch eine umgekehrte Strömungsführung des Fluids für die Gewährleistung der Kühlung.

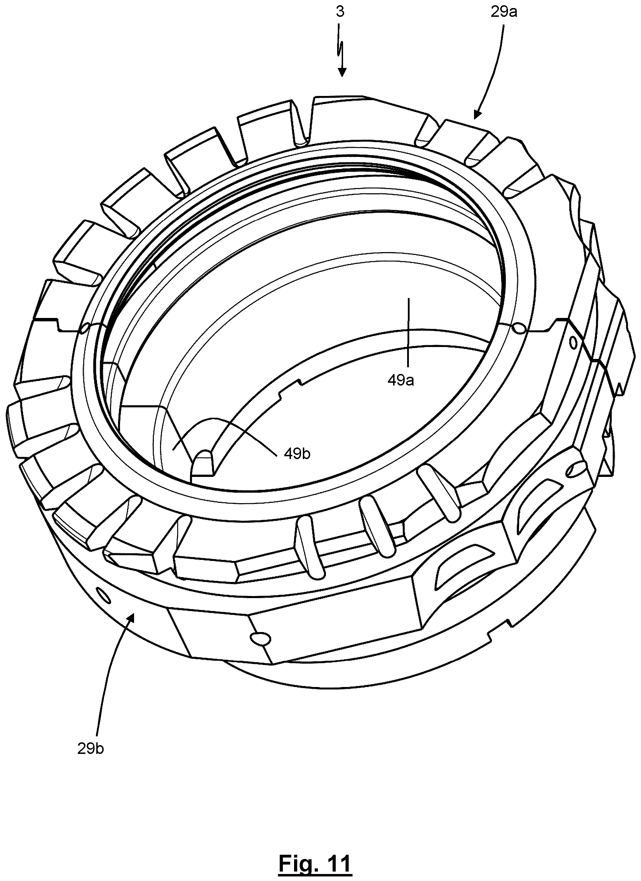

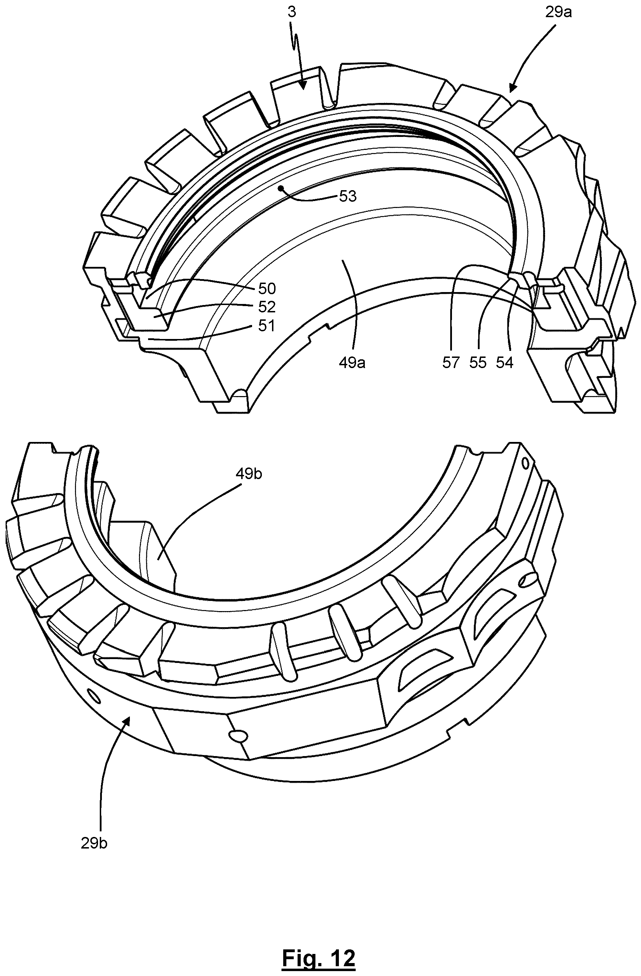

**Fig. 11** und **12** zeigen die Mündungsform 3 mit den Mündungsformhälften 29. Die Mündungsformhälften 29 verfügen in dem unteren Endbereich über halbzylindrische Führungsflächen 49. An den Führungsflächen 49 sind die Zylinderabschnitte 46 des Presspegels 4 geführt. Die Mündungsformhälften 29 bilden in dem oberen Endbereich zwei umlaufende Nuten 50, 51, die durch einen umlaufenden Vorsprung 52 voneinander getrennt sind. Die Begrenzungen der Nuten 50, 51 und des Vorsprungs 52 sind in erster Näherung im Halblängsschnitt in der Form eines liegenden U ausgebildet. Die untere Nut 51 ist hierbei tiefer ausgebildet, so dass der Boden der unteren Nut 51 einen größeren Durchmesser hat. Die obere Nut 50 wird begrenzt durch eine von beiden Mündungsformhälften 29 gebildete, umlaufende Formnase 34. Die Formnase 34 verfügt über eine radial innenliegende Innenfläche 53, die einen Zylinderabschnitt 54 aufweist. Der Zylinderabschnitt 54 dient der Formgebung der Mantelfläche 19 des Einkochglas-Deckels 14. Nach oben schließt an den Zylinderabschnitt 54 ein umlaufender Formabschnitt 55 an, der insbesondere im Halblängsschnitt viertelkreisförmig oder anderweitig steig gekrümmt ist. Mittels des Formabschnitts 55 erfolgt eine Formgebung des Vorsprungs 22 des Einkochglas-Deckels 14 auf der radial außenliegenden Seite von dem am weitesten vorspringenden Punkt 56 des Vorsprungs 22. Oberhalb des Formabschnitts 55 verfügt die Formnase 34 über einen weiteren Zylinderabschnitt 57, der dann über eine Abrundung in die Oberseite der Mündungsformhälften 29 übergeht. Der Zylinderabschnitt 57 liegt in der in Fig. 5b dargestellten Betriebsstellung der Vorformeinheit 26 (unter Ausbildung eines geringen Spaltes) radial innen an dem Vorformboden 7 an.

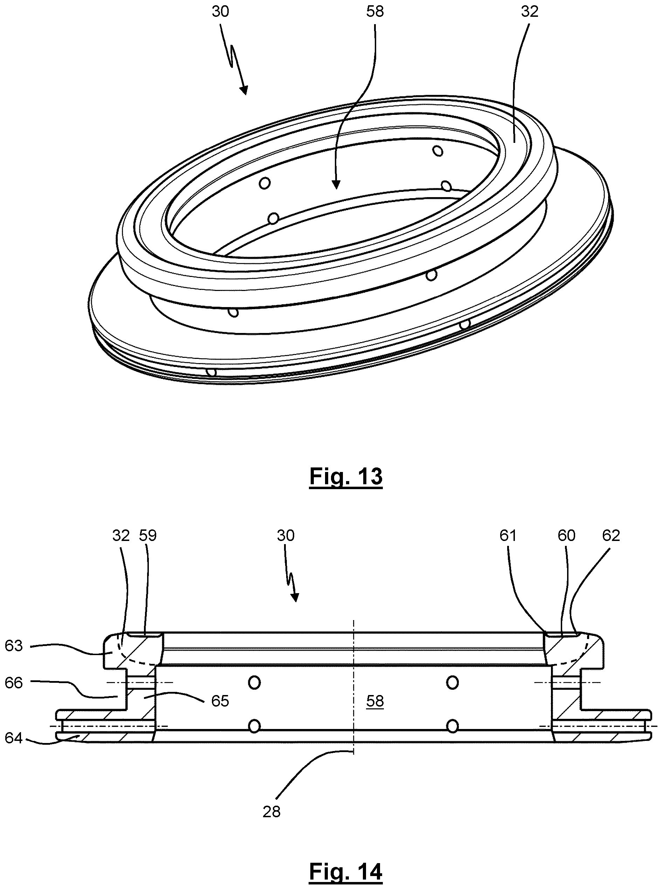

**Fig. 13** und **14** zeigen den Deckring 30. Der Deckring 30 verfügt über eine durchgehende Innenbohrung 58, die im Bereich der Panzerung 32 geringfügig verengt ist. Hierbei ist der Innendurchmesser der Panzerung 32 geringfügig konvex ausgebildet oder abgewinkelt, wobei der kleinste Innendurchmesser der Panzerung 32 im oberen Endbereich angeordnet ist. Dieser kleinste Innendurchmesser der Panzerung 32 bildet die erforderliche Passung mit dem Zylinderabschnitt 45 des Presspegels 4 aus. Der darunter angeordnete zylindrische Innendurchmesser des Deckrings 30 bildet die erforderliche Passung mit dem Zylinderabschnitt 46 des Presspegels 4 aus.

In Fig. 13 und 14 ist zu erkennen, dass die Oberseite 59 des Deckrings 30, hier die Oberseite 59 der Panzerung 32, in einem Halblängsschnitt eine wannenartige Kontur aufweist mit einem in einer Querebene verlaufenden Boden 60 und einer radial innenliegenden umlaufenden Lippe 61 sowie einem radial außenliegenden umlaufenden Anstiegsbereich 62. Der Boden 60 dient der Formgebung der Oberseite 17 des Randabschnitts 16 des Einkochglas-Deckels 14, während die Lippe 61 und der Anstiegsbereich 62 der Abrundung des radial innenliegenden sowie radial außenliegenden Endbereichs der Oberseite 17 des Randabschnitts 16 des Einkochglas-Deckels 14 dienen.

Der Deckring 30 verfügt in dem Halblängsschnitt über die Form eines liegenden U, bei dem sich Seitenschenkel 63, 64 von einem Grundschenkel 65, der parallel zur Längsachse 28 orientiert ist, parallel zueinander radial nach außen erstrecken. Der obere Grundschenkel 63 ist kürzer ausgebildet als der untere Grundschenkel 64. Zwischen den Seitenschenkeln 63, 64 ist eine Nut 66 ausgebildet, deren Boden von dem Grundschenkel 65 gebildet ist. In dem montierten Zustand gemäß Fig. 5b ist der Vorsprung 52 der Mündungsformhälften 29 in der Nut 66 des Deckrings 30 aufgenommen, während die Seitenschenkel 63, 64 des Deckrings 30 in den Nuten 50, 51 der Mündungsformhälften 29 aufgenommen sind, womit der Deckring 30 in den Mündungsformhälften 29 fixiert ist.

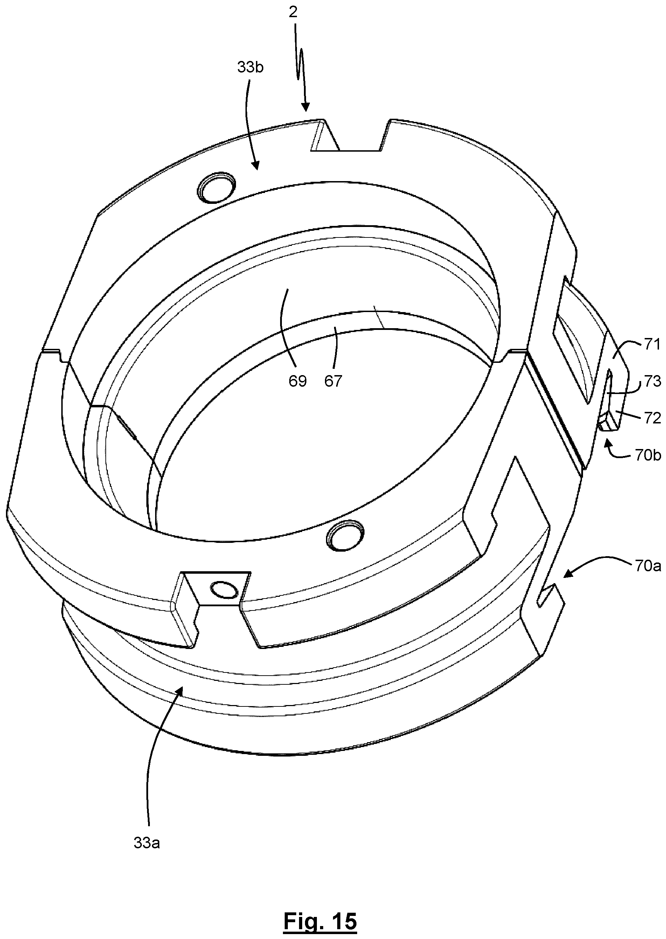

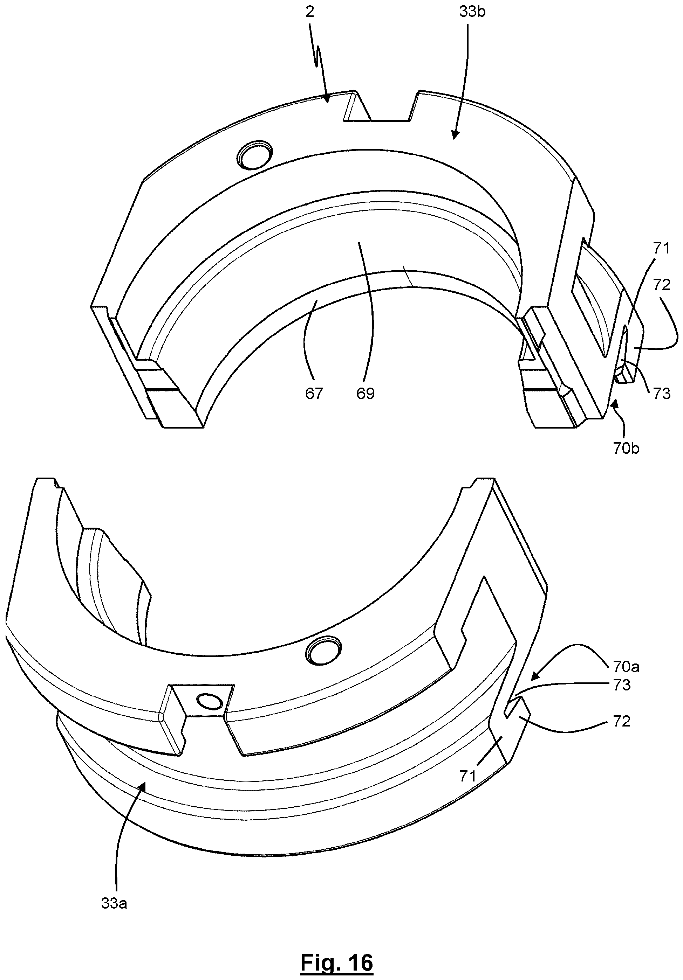

**Fig. 15** und **16** zeigen die Vorform 2 mit den Vorformhälften 33a, 33b. Die Vorformhälften 33a, 33b bilden in dem unteren Endbereich eine zylindrische Führungsfläche 67, an der der Vorformboden 7, ggf. unter Zwischenschaltung eines Gleit- und/oder Führungselements 68, geführt ist. Oberhalb der Führungsfläche 67 bilden die Vorformhälften 33 eine kegelstumpfförmige Einführfläche 69, die die Einführbewegung des Vorformbodens 7 in die Vorformhälften 33 unterstützen und/oder zentrieren kann.

Auf der Unterseite bilden die Vorformhälften 33 jeweils einen Halter 70 aus, der sich vorzugsweise lediglich über einen Teilumfangsbereich der Vorformhälften 33 erstreckt und in einem Halblängsschnitt in grober Näherung L-förmig ausgebildet ist mit einem sich parallel zur Längsachse 28 erstreckenden Schenkel 71 sowie einem sich quer zur Längsachse 28 radial nach innen erstreckenden Schenkel 72. Zwischen der Unterseite der Vorformhälften 33 und dem Schenkel 72 kann ein sich nach außen verengender Spalt 73 ausgebildet sein. Die Halter 70 halten die Mündungsformhälften 29 zusammen. Zu diesem Zweck verfügen die Mündungsformhälften 29 über lediglich über einen Teilumfangsbereich umlaufende, radial nach außen orientierte Rippen (hier nicht dargestellt), die aufgenommen werden können in den Spalten 73 der Halter 70.

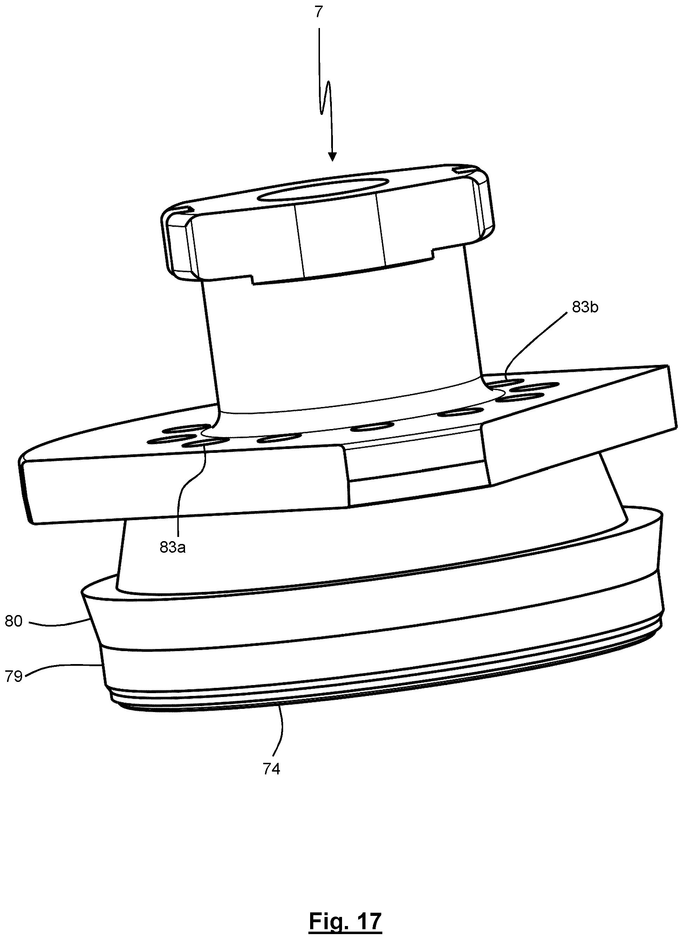

**Fig. 17** zeigt den Vorformboden 7. Der Vorformboden 7 verfügt über eine Unterseite 74. Die Unterseite 74 weist eine kreisförmige Vertiefung 75 auf, welche die Unterseite des Bodenabschnitts 15 des Einkochglas-Deckels 14 formt und entsprechend geringfügig domartig konvex gewölbt sein kann. Zur radialen Begrenzung der Vertiefung 75 verfügt die Unterseite 74 des Vorformbodens 7 über einen umlaufenden Bund 76. Die zylindrische Innenfläche des Bunds 76 dient der Formgebung der Außenfläche des Versatzabschnitts 21 des Einkochglas-Deckels 14. Im Bereich der Stirnseite verfügt der Bund 76 über einen umlaufenden Vorsprung 77 sowie radial außenliegend von dem Vorsprung 77 über einen Rücksprung 78 (s. Fig. 5b). Der Vorsprung 77 formt die Vertiefung 23 der Unterseite des Einkochglas-Deckels 14. Der Rücksprung 78 verfügt über eine Kontur in einem Halblängsschnitt, die vorzugsweise viertelkreisförmig konkav gewölbt ist. Mittels des Rücksprungs 78 erfolgt die Formgebung des Vorsprungs 22 bis zu dem Punkt 56 des Vorsprungs 22 des Einkochglas-Deckels 14, der am weitesten vorspringt.

Der Vorformboden 7 verfügt über eine Führungsfläche 79, vorzugsweise mit dem Gleit- und/oder Führungselement 68, sowie eine umlaufende kegelstumpfförmige Einführfläche 80.

Wie insbesondere in Fig. 5b zu erkennen ist, kann der Vorformboden 7 über einen zentralen Kühlkanal 81 verfügen, der über eine Kammer 82 in Kühlkanäle 83 mündet. Hierbei sind der Kühlkanal 81 und die Kammer 82 koaxial zur Längsachse 28 angeordnet, während die Kühlkanäle 83 unter einem spitzen Winkel wieder aus dem Vorformboden 7 herausgeführt sind.

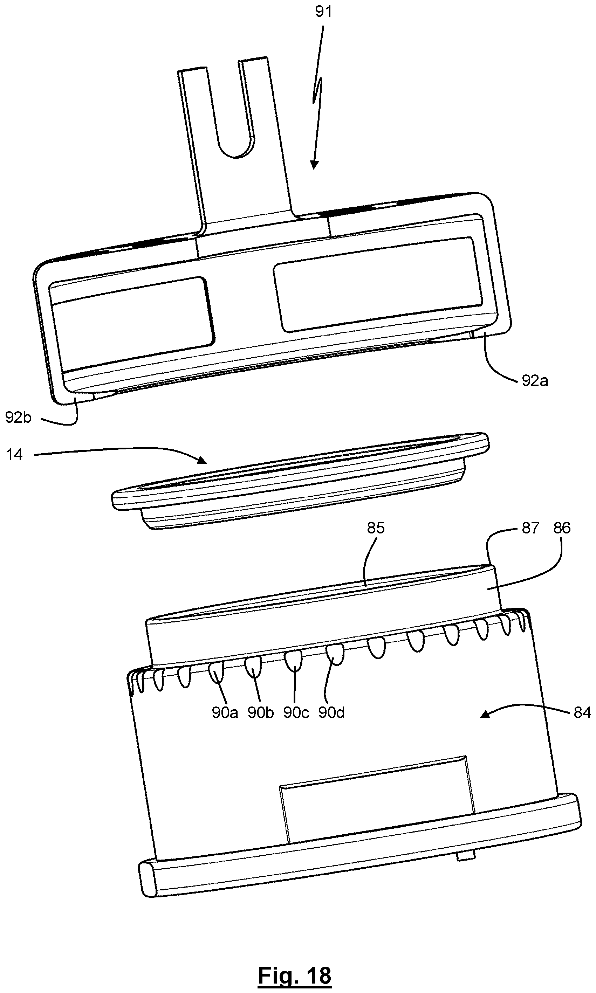

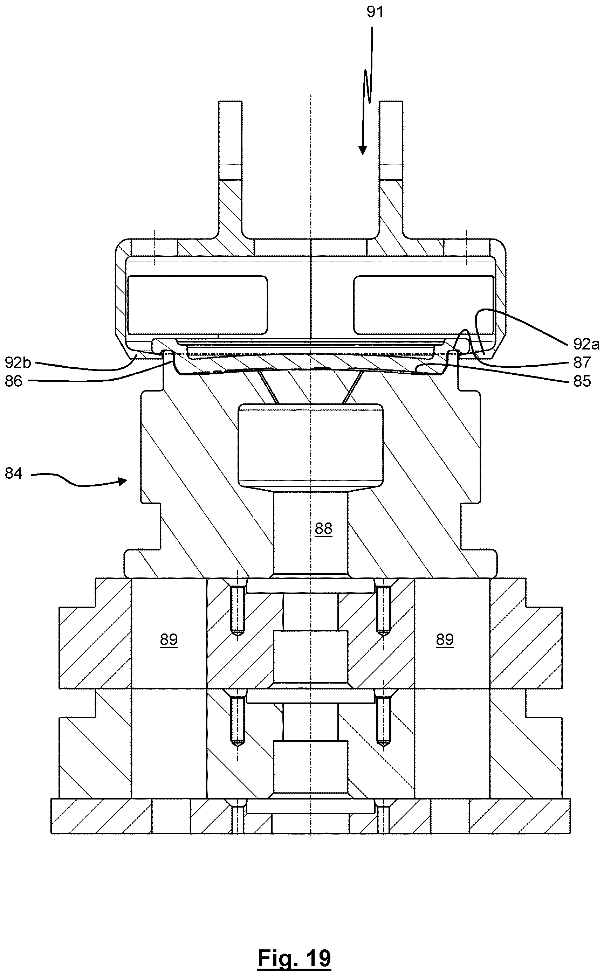

**Fig. 18** und **19** zeigen eine Fertigformeinheit 84, die auf der Fertigformseite 12 der IS-Maschine angeordnet ist. Nach Abschluss der Formgebung auf der Vorformseite 11 mittels der Vorformeinheit 26 wird der Einkochglas-Deckel 14 mittels des Wechselmechanismus 9 gewendet und auf die Vorformseite 11 transferiert und dort auf der Fertigformeinheit 84 abgelegt. Die Fertigformeinheit 84 verfügt über eine Vertiefung 85, in der passgenau der Bodenabschnitt 15 und der Versatzabschnitt 21 Aufnahme finden. Der die Vertiefung 85 radial begrenzende Bund 86 weist eine Stirnfläche 87 auf, die in die Vertiefung 23 der Unterseite 18 des Randabschnitts 16 des Einkochglas-Deckels 14 eintritt, womit eine Zentrierwirkung des Einkochglas-Deckels in der Vertiefung 85 der Fertigformeinheit 84 herbeigeführt werden kann. Möglich ist, dass die Fertigformeinheit 84 mindestens einen Saugkanal 88 aufweist, über den ein Unterdruck erzeugt werden kann, mit dem der Einkochglas-Deckel 14 in die Vertiefung 85 eingesaugt und hierin fixiert werden kann. Möglich ist auch, dass die Fertigformeinheit 84 integrierte Kühlkanäle 89 aufweist, die in Auslassbohrungen 90 für ein Kühlfluid münden. Die Auslassbohrungen 90 sind derart angeordnet und orientiert, dass das Fluid in dem Kühlkanal 89 den Einkochglas-Deckel 14 zwecks Kühlung beaufschlagt.

In Fig. 18 und 19 ist ein Entnahmewerkzeug 91 dargestellt, über welches (insbesondere nach einer hinreichenden Abkühlung des Einkochglas-Deckels 14) der Einkochglas-Deckel 14 gegriffen und von der Fertigformeinheit 84 entnommen werden kann, beispielsweise um den Einkochglas-Deckel 14 an eine Abfördereinrichtung, insbesondere ein abförderndes Förderband, zu übergeben.

Das Entnahmewerkzeug 91 ist vorzugsweise mit zwei Entnahmewerkzeughälften ausgebildet, die Zungen 92a, 92b aufweisen, die unter die Unterseite 18 des Randabschnitts 16 greifen, womit ein Anheben des Einkochglas-Deckels 14 möglich ist. Auch seitlich ist dann der Einkochglas-Deckel 14 in dem Entnahmewerkzeug 91 bei geschlossenem Entnahmewerkzeughälften gefangen.

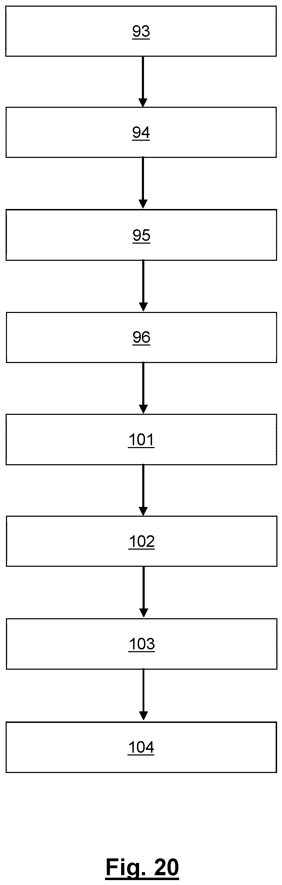

**Fig. 20** zeigt beispielhaft ein Verfahren zur Herstellung eines Einkochglas-Deckels 14 mit einer Vorformeinheit 26 und einer Fertigformeinheit 84:
In einem Verfahrensschritt 93 erfolgt die Montage der Mündungsformhälften 29a, 29b zur Mündungsform 3 sowie die Montage der Vorformhälften 33a, 33b zur Vorform 2. In der montierten Stellung sichern die Halter 70 der Vorform 2 die montierte Stellung der Mündungsformhälften 29a, 29b. In der montierten Stellung wird der Presspegel 4 mit dem darin angeordneten Kühlpegel 27 im Inneren der Mündungsform 3 angeordnet.

In einem Verfahrensschritt 94 wird der Presspegel 4 mit dem darin angeordneten Kühlpegel 27 über einen hier nicht dargestellten Aktuator in die in Fig. 5b wirksame Betriebsstellung überführt, die zuvor auch als Endstellung bezeichnet ist, und in dieser fixiert.

In einem Verfahrensschritt 95 wird dann der Glasposten 6 von oben eingebracht, so dass dieser auf die Oberseite 43 des Presspegels 4 gelangt.

In einem Verfahrensschritt 96 wird dann der Vorformboden 7 in die Vorform 2 eingebracht und mittels eines Aktuators in die in Fig. 5b wirksame Betriebsstellung bewegt. Während der Bewegung des Vorformbodens 7 wird der Glasposten in der Kavität 5 verteilt, bis diese vollständig ausgefüllt ist. Während der Bewegung des Vorformbodens 7 formt die Oberseite 43 des Presspegels 4 die Oberseite des Bodenabschnitts 15 des Einkochglas-Deckels 14, die Innenfläche des Versatzabschnitts 21 des Einkochglas-Deckels 14 und die Stufe 20 des Einkochglas-Deckels 14.

Im Übergangsbereich zwischen dem Presspegel 4 und dem Deckring 30, insbesondere der Lippe 61 der Panzerung 32, ergibt sich ein Spalt, im Bereich dessen ein Presspegel-Formgrad 97 ausgebildet wird. Der Deckring 30, hier die Panzerung 32 im Bereich von der Lippe 61 über den Boden 60 bis zu dem Anstiegsbereich 62, formt die Oberseite 17 des Randabschnitts 16 des Einkochglas-Deckels 14.

Im Übergangsbereich von dem Dichtring 30, hier von dem Anstiegsbereich 62, zu der Formnase 34 der Mündungsformhälften 29 ergibt sich ein Spalt, im Bereich dessen ein Deckring-Formgrad 98 des Einkochglas-Deckels 14 ausgebildet wird. Die Mantelfläche 19 des Randabschnitts 16 sowie der Abschnitt des Vorsprungs 22, der radial außenliegend von dem Punkt 56 angeordnet ist, werden von der Formnase 34 der Mündungsformhälften 29a, 29b, hier dem Zylinderabschnitt 54 und dem Formabschnitt 55 geformt.

Ein Spalt ergibt sich zwischen der Formnase 34 der Mündungsformhälften 29 und dem Bund 76 des Vorformbodens 7, so dass sich im Bereich des am weitesten vorstehenden Punktes 56 ein Vorsprung-Formgrad 99 des Einkochglas-Deckels 14 ergibt.

Die Unterseite 74 des Vorformbodens 7 formt mit dem Bund 76 und der Vertiefung 75 die Unterseite des Bodenabschnitts 15 sowie die außenliegende Mantelfläche des Versatzabschnitts 21, die Vertiefung 23 und den Vorsprung 22 bis zu dem am meisten vorstehenden Punkt 56.

Mündungsformhälften-Formgrade 100a, 100b können sich im Bereich der Stoßfugen der Mündungsformhälften 29a, 29b im Bereich der Mantelfläche 19 des Einkochglas-Deckels 14 ergeben.

In einem Verfahrensschritt 101 wird dann die Vorformeinheit 26 (ggf. nach einer hinreichenden Abkühlung des Einkochglas-Deckels 14) geöffnet, indem über den Aktuator der Vorformboden 7 aus der Vorform 2 entfernt wird und die Vorformhälften 33 geöffnet und entfernt werden. Da die Formnase 34 weiterhin den Randabschnitt 16 des Einkochglas-Deckels 14 hintergreift, ist der Einkochglas-Deckel 14 weiterhin an der Mündungsform 3 gehalten. Auch der Presspegel 4 mit dem Kühlpegel 27 kann aus der Mündungsform 3 entfernt werden.

In einem Verfahrensschritt 102 wird dann die Mündungsform 3 mit dem daran gehaltenen Einkochglas-Deckel 14 von dem Wechselmechanismus 9 gegriffen und von der Vorformseite 11 auf die Fertigformseite 12 überführt, wobei ein Wenden erfolgt.

In dem Verfahrensschritt 103 wird dann der Einkochglas-Deckel 14 auf der Fertigformeinheit 84 abgelegt, wie dies in Fig. 19 dargestellt ist und zu Fig. 19 beschrieben worden ist.

Nach einer weiteren Abkühlung des Einkochglas-Deckels 14 kann in einem Verfahrensschritt 104 ein Greifen des Einkochglas-Deckels 14 durch das Entnahmewerkzeug 91 erfolgen und eine Überführung des Einkochglas-Deckels 14 zu einer Abfördereinrichtung erfolgen.

### BEZUGSZEICHENLISTE

- 1: Vorform-Maschineneinheit
- 2: Vorform
- 3: Mündungsform
- 4: Presspegel
- 5: Kavität
- 6: Glasposten
- 7: Vorformboden
- 8: Külbel
- 9: Wechselmechanismus
- 10: Schwenkachse
- 11: Vorformseite
- 12: Fertigformseite
- 13: Fertigform
- 14: Einkochglas-Deckel
- 15: Bodenabschnitt
- 16: Randabschnitt
- 17: Oberseite
- 18: Unterseite
- 19: Mantelfläche
- 20: Stufe
- 21: Versatzabschnitt
- 22: Vorsprung
- 23: Vertiefung
- 24: Hinterschneidung
- 25: Boden
- 26: Vorformeinheit
- 27: Kühlpegel
- 28: Längsachse
- 29: Mündungsformhälfte
- 30: Deckring
- 31: Grundkörper
- 32: Panzerung
- 33: Vorformhälfte
- 34: Formnase
- 35: Ringbund
- 36: Stufe
- 37: Zwischenabschnitt
- 38: Endabschnitt
- 39: Kanal
- 40: Bohrung
- 41: Innenraum
- 42: Kanal
- 43: Oberseite
- 44: Stufe
- 45: Zylinderabschnitt
- 46: Zylinderabschnitt
- 47: Innenraum
- 48: Zwischenraum
- 49: Führungsfläche
- 50: Nut
- 51: Nut
- 52: Vorsprung
- 53: Innenfläche
- 54: Zylinderabschnitt
- 55: Formabschnitt
- 56: Punkt
- 57: Zylinderabschnitt
- 58: Innenbohrung
- 59: Oberseite
- 60: Boden
- 61: Lippe
- 62: Anstiegsbereich
- 63: Seitenschenkel
- 64: Seitenschenkel
- 65: Grundschenkel
- 66: Nut
- 67: Führungsfläche
- 68: Gleit- und/oder Führungselement
- 69: Einführfläche
- 70: Halter
- 71: Schenkel
- 72: Schenkel
- 73: Spalt
- 74: Unterseite
- 75: Vertiefung
- 76: Bund
- 77: Vorsprung
- 78: Rücksprung
- 79: Führungsfläche
- 80: Einführfläche
- 81: Kühlkanal
- 82: Kammer
- 83: Kühlkanal
- 84: Fertigformeinheit
- 85: Vertiefung
- 86: Bund
- 87: Stirnfläche
- 88: Saugkanal
- 89: Kühlkanal
- 90: Auslassbohrung
- 91: Entnahmewerkzeug
- 92: Zunge
- 93: Verfahrensschritt
- 94: Verfahrensschritt
- 95: Verfahrensschritt
- 96: Verfahrensschritt
- 97: Pegel-Formgrat
- 98: Deckring-Formgrat
- 99: Vorsprung-Formgrat
- 100: Mündungsformhälften-Formgrat
- 101: Verfahrensschritt
- 102: Verfahrensschritt
- 103: Verfahrensschritt
- 104: Verfahrensschritt

## Patentansprüche

1. Verfahren zur Herstellung eines Einkochglas-Deckels (14), der einen Bodenabschnitt (15), einen Versatzabschnitt (21) und einen Randabschnitt (16) aufweist, wobei der Randabschnitt (16) auf der Unterseite (18) einen umlaufenden Vorsprung (22) und radial innenliegend von dem Vorsprung (22) eine umlaufende Vertiefung (23) aufweist, wobei der Vorsprung (22) und die Vertiefung (23) eine Hinterschneidung (24) bilden, **dadurch gekennzeichnet, dass** der Einkochglas-Deckel (14) auf einer IS-Maschine hergestellt wird, wobei auf einer Vorformseite (11) der IS-Maschine eine Formgebung des Einkochglas-Deckels (14) erfolgt, während auf einer Fertigformseite (12) der IS-Maschine keine Formgebung des Einkochglas-Deckels (14) durch ein Blasverfahren erfolgt.

2. Verfahren nach Anspruch 1, **wobei** auf der Vorformseite (11) die Formgebung des Einkochglas-Deckels (14) ausschließlich durch
a) einen Presspegel (4),
b) einen Deckring (30),
c) zwei Mündungsformhälften (29) und
d) einen Vorformboden (7)
erfolgt, wobei vorzugsweise Vorformhälften (33) , die nicht an der Formgebung des Einkochglas-Deckels (14) beteiligt sind, Halter (70) aufweisen, welche die Mündungsformhälften (29) während der Formgebung zusammenhalten.

3. Verfahren nach Anspruch 1 oder 2, **wobei**
a) einer umlaufender Vorsprung-Formgrat (99) des Einkochglas-Deckels (14) von einem Übergang der Mündungsformhälften (29) zu dem Vorformboden (7) gebildet wird und/oder
b) ein umlaufender Presspegel-Formgrat (97) des Einkochglas-Deckels (14) von einem Übergang des Deckrings (30) zu dem Presspegel (4) gebildet wird und/oder
c) ein umlaufender Deckring-Formgrat (98) des Einkochglas-Deckels (14) von einem Übergang des Deckrings (30) zu den Mündungsformhälften (29) gebildet wird und/oder
d) zwei Mündungsformhälften-Formgrate (100) des Einkochglas-Deckels (14) von einem Übergang zwischen den beiden Mündungsformhälften (29) gebildet werden.

4. Verfahren nach einem der Ansprüche 2 bis 3, **wobei** auf der Vorformseite (11) die Formgebung des Einkochglas-Deckels (14) ausschließlich durch eine Bewegung des Vorformbodens (7) erfolgt, während keine Bewegung des Presspegels (4), des Deckrings (30) und der beiden Mündungsformhälften (29) erfolgt.

5. Verfahren nach einem der vorhergehenden Ansprüche, **wobei** auf der Vorformseite (11) eine Abkühlung so weit erfolgt, dass eine zumindest teilweise Aushärtung des Materials des Einkochglas-Deckels (14) erfolgt.

6. Verfahren nach einem der vorhergehenden Ansprüche, **wobei** ein Vorformboden (7) verwendet wird, welcher zumindest teilweise aus einem Bronzematerial hergestellt ist, wobei auf der Vorformseite (11) dem Material des Einkochglas-Deckels (14) über das Bronzematerial Wärme entzogen wird.

7. Verfahren nach einem der Ansprüche 2 bis 6, **wobei** der Deckring (30) einen Grundkörper (31) und eine Panzerung (32) aufweist und der Deckring (30) ausschließlich im Bereich der Panzerung (32) an der Formgebung des Einkochglas-Deckels (14) beteiligt ist.

8. Verfahren nach einem der vorhergehenden Ansprüche, **wobei**
a) nach der Formgebung auf der Vorformseite (14) ein Wechselmechanismus (9) den in den Mündungsformhälften (29) gehaltenen Einkochglas-Deckel (14) von einer Vorformseite (11) der IS-Maschine zu einer Fertigformseite (12) der IS-Maschine bewegt und dabei wendet und
b) durch Öffnen der Mündungsformhälften (29) der Einkochglas-Deckel(14) mit der Unterseite (18) des Randabschnitts (16) und/oder der Unterseite des Bodenabschnitts (15) auf einer Fertigformeinheit (84) ablegt wird und
c) nach einer Verweildauer des Einkochglas-Deckels (14) ohne weitere Formgebung auf der Fertigformeinheit (84) der Einkochglas-Deckel (14) über ein Entnahmewerkzeug (91) von der Fertigformeinheit (84) entfernt wird.

9. Verfahren zur Herstellung erster Produkte und von den ersten Produkten abweichenden zweiten Produkten auf derselben IS-Maschine, bei dem
a) in einer ersten Produktionsphase als erste Produkte Einkochglas-Deckel (14) auf der IS-Maschine mit einem Verfahren nach einem der vorhergehenden Ansprüche hergestellt werden, ohne dass auf einer Fertigformseite (12) der IS-Maschine eine Formgebung des Einkochglas-Deckels (14) durch ein Blasverfahren erfolgt, und
b) in einer zweiten Produktionsphase als zweite Produkte Glasprodukte auf der IS-Maschine hergestellt werden, wobei bei der Herstellung der Glasprodukte eine blasende Formgebung auf der Fertigformseite (12) der IS-Maschine erfolgt.

10. Einkochglas-Deckel (14) mit einem Bodenabschnitt (15), einem Versatzabschnitt (21) und einem Randabschnitt (16), wobei der Randabschnitt (16) auf der Unterseite (18) einen umlaufenden Vorsprung (22) und radial innenliegend von dem Vorsprung (22) eine umlaufende Vertiefung (23) aufweist und der Vorsprung (22) und die Vertiefung (23) eine Hinterschneidung (24) bilden, wobei der Einkochglas-Deckel (14) vorzugsweise mit einem Verfahren nach einem der Ansprüche 1 bis 9 hergestellt ist, **dadurch gekennzeichnet, dass**
a) der Randabschnitt (16) des Einkochglas-Deckels (14) an dem am weitesten vorspringenden Punkt (56) des Vorsprungs in einem Halblängsschnitt (22) einen umlaufenden Vorsprung-Formgrat (99) aufweist und/oder
b) der Einkochglas-Deckel (14) zwei Mündungsformhälften-Formgrate (100) aufweist, die parallel zu einer Längsachse (28) orientiert sind und diametral gegenüberliegend an einer äußeren Mantelfläche (28) des Randabschnitts (16) vorhanden sind, wobei sich die beiden Mündungsformhälften-Formgrate (100) vorzugsweise jeweils bis zu dem umlaufenden Vorsprung-Formgrat (99) erstrecken.

11. Einkochglas-Deckel (14) nach Anspruch 10, **dadurch gekennzeichnet, dass** der Einkochglas-Deckel (14)
a) einen umlaufenden Presspegel-Formgrat (97) an einem Übergang des Randabschnitts (16) zu dem Versatzabschnitt (21) aufweist und/oder
b) einen umlaufenden Deckring-Formgrat (98) an einem Übergang einer Oberseite (17) des Randabschnitts (16) zu einer äußeren Mantelfläche (19) des Randabschnitts (16) aufweist.
